# EUROPEAN PATENT SPECIFICATION

(11) **EP 3 679 272 B1**
(45) Date of publication and mention of the grant of the patent: **21.07.2021**
(21) Application number: 18778804.7
(22) Date of filing: 03.09.2018
(51) Int. Cl.: F16H 3/12

(54) **A DUAL-CLUTCH TRANSMISSION**
DOPPELKUPPLUNGSGETRIEBE
TRANSMISSION À DOUBLE EMBRAYAGE

(30) Priority: 04.09.2017 IT 201700098892
(43) Date of publication of application: 15.07.2020
(73) Proprietor: CNH Industrial Italia S.P.A., 10135 Turin (IT)
(72) Inventor: BALBONI, Claudio, 41100 Modena (IT); BULGRIEN, Garth, H., Ephrata Pennsylvania 17522 (US); PASSALACQUA, Gianni, 41126 Modena (MO) (IT); SEDONI, Enrico, 41126 Modena (IT)
(74) Representative: CNH Industrial IP Department
(86) International application number: PCT/EP2018/073619
(87) International publication number: WO 2019/043226

(56) References cited:
- CN-A- 103 322 133
- CN-U- 203 176 265
- JP-B2- 4 782 188
- US-A1- 2009 203 484

## Description

### Background of the Invention

The invention relates to a dual-clutch transmission (DCT), for a vehicle.

In common with all variable vehicle transmissions a DCT converts rotary drive input from an engine crankshaft to a rotary drive output that is fed to e.g. a differential or other final drive assembly, with a transmission ratio taking effect between the rotary input and output; and the inclusion of an ability to select the prevailing transmission ratio.

DCT's were developed initially for use in race cars, very high performance supercars and a few high-performance motorcycles. DCT's are desired in such applications partly because they can readily be configured as either fully automatic transmissions, or semi-automatic transmissions (in which a vehicle driver can effect sequential gear shifting e.g. through the use of steering wheel-mounted shift paddles or shift lever buttons) while providing for very quick transmission ratio shift times.

A characteristic of a DCT is the presence of two parallel transmission paths only one of which is powered at any one time. This permits the pre-selection of the next (either higher or lower) ratio in a sequence in an unpowered branch of the transmission before the drive path through the transmission is caused to pass from one branch to the other, by way of a pair of clutches only one of which transmits drive at any one time.

Pre-selection in this way permits part of the shifting motion of components in the transmission to take place in a transfer path that by reason of disconnection at its clutch is not powered. This means that the remaining steps in the process of the transmission shift that result in the disconnection of one ratio from the final drive and the engagement of the next in the sequence are of short duration, amounting essentially to the virtually simultaneous switching of two clutch assemblies; and in some examples take only a few milliseconds. This in turn minimises the amount of time for which the final drive is not subjected to driving torque, and therefore provides for good acceleration performance in powerful cars.

DCT's are not particularly commonplace in more mundane passenger cars, partly because they require in effect two parallel gear trains to be built inside the gearbox and the cost of this for numerous reasons is not justified in most family and commuter car designs. Also the benefit of very quick transmission shifts is negligible in many cars of this type, although some passenger car manufacturers have increased the availability of DCT technology across their vehicle ranges in recent years.

Larger working vehicles on the other hand can more obviously benefit from the installation of dual-clutch transmissions. This is partly because large, powerful vehicles such as combine harvesters, tractors, loaders, some railcars, excavators, other construction vehicles and transporters of various kinds are generally somewhat expensive to design and build. As a consequence the additional cost of a DCT represents a smaller percentage of the vehicle cost than in a passenger car, with the result that the provision of a DCT is more acceptable on economic grounds.

Also it is often important in large vehicles, such as those mentioned, for transmission shifts to take place very quickly so that the period during transmission ratio selections when the final drive is un-powered is kept as short as possible. This is because the inertia of rotating parts of a large working vehicle is generally high, with the result that such parts can decelerate rapidly when torque is interrupted. If the transmission shifts slowly the aforementioned effects in turn can cause inadvertent selection of an incorrect transmission ratio for the vehicle speed at the ratio engagement time; and hence can cause unacceptable slowing of a vehicle and increased fuel costs. A large vehicle transmission that is slow to shift can in some situations even have adverse safety implications e.g. if an incorrect ratio is selected as the vehicle accelerates from rest when exiting a road junction.

Large working vehicles moreover nearly always must be subject to sequential transmission shifts, at least when moving forwardly on roads. This is because the heavy masses of such vehicles and the loads they haul means that any skipping of ratios in a sequence during acceleration can lead to selection of an inappropriate ratio that may be beyond the ability of the torque of the vehicle engine to cope with. This causes slowing of the vehicle that may be unacceptable in road traffic situations; and could in an extreme case lead to stalling of the engine and/or damage to parts of the drive train.

As a result the drivers of large working vehicles almost without exception select transmission ratios in sequence at least during vehicle acceleration and when *"engine braking"* during deceleration. Such use is consistent with the normal mode of operation of an automatic or semi-automatic DCT.

A further reason that DCT's are suitable for use in large vehicles is that their transmissions require a much larger number of selectable ratios than the transmissions of (relatively light) passenger cars, which typically require five or six forward ratios and one reverse ratio. A large working vehicle in contrast might in a relatively simple version include at least 12 forward ratios and perhaps six reverse ratios, sometimes spread across two or more ratio ranges.

The use of two parallel transmission paths within the DCT allows these to be accommodated without requiring the length of the transmission housing to be unacceptably great. Furthermore the cost of a DCT generally becomes easier to justify the larger the number of ratios in the transmission.

Yet a further advantage of DCT's in large vehicles, at least when compared to conventional hydraulic automatic transmissions, is that there is no need in a DCT set-up for a torque converter (i.e. a fluid coupling that assists to couple the output of an engine crankshaft to an input shaft of the transmission, with a variable uplift in output torque). Torque converters are large, heavy components that dissipate some engine power with the result that they have an adverse influence on vehicle fuel consumption.

A problem with DCT's in general however relates to synchronisation.

During operation of a DCT the rotary output is additionally used to cause rotation of the un-powered branch of the transmission. This allows the speed of rotation of the un-powered branch of the transmission to approximate that of the powered branch, ready for the required ratio shift. JP4782188 discloses a twin clutch type transmission for a motor car including an input shaft, an odd-stage transmission mechanism, an even-stage transmission mechanism, and an output mechanism, whereas US2009203484 discloses a transmission having an input member, an output member, a clutch assembly, two countershaft gearing arrangements, one planetary gear set, a plurality of interconnecting members, and a plurality of torque transmitting devices.

Although parts of the un-powered branch of a DCT are caused in this way to rotate, other parts of the un-powered branch such as the gear that is about to be pre-selected are free to rotate on their mounting shafts until pre-selection occurs. As a result it is necessary to cause acceleration of parts of the un-powered branch as part of the pre-selection process.

Such pre-selection of the next ratio in a sequence involves the movement of a selector in the form of a synchroniser that typically is a dog clutch longitudinally slidably mounted by way of longitudinally extending splines on the transmission shaft in question. The dog clutch moves along the shaft under the command of e.g. a microprocessor and solenoid combination or a hydraulic actuator to fix one or other adjacent transmission gear to the shaft so that when the clutch change occurs and the unpowered branch becomes powered the transmission gear transfers drive.

The teeth of the dog clutch are shaped to allow a graduated engagement with projections on the gear in question thereby causing gradual synchronisation of the previously freely rotatable gear with the rotating gear shaft on which it is mounted. The dog clutch must in conventional DCT designs accelerate both the hub carrying the preselected gear and any parts of the transmission locked to it.

The need to accelerate a significant mass in this way requires the dog clutch to be over-engineered compared with what may be necessary if a lighter duty synchronisation was possible. The existing synchronisation designs therefore lead both to unnecessary transmission construction costs and also to the wasting of fuel in repeatedly accelerating massive parts of the transmission from rest.

A further problem with DCT designs for large work vehicles, like tractors, is that all forward gears need to be replicated in reverse. It is a challenge to achieve this in a compact lay-out.

### Summary of the Invention

According to the invention there is provided a dual-clutch transmission according to claim 1.

This arrangement provides several advantages that are not predictable from knowledge of prior art DCT's.

Primary among the advantages is that the presence of the linking gear causes rotation of part of the mass of the clutch of the un-powered branch of the transmission. Thus part of the energy of the input drive is employed for this purpose. This reduces the loading on the synchronisers that hence may be manufactured as lighter duty items than hitherto, at lower cost than in prior art DCT's. Also since some parts of the transmission need not be repeatedly accelerated from rest, fuel consumption is reduced.

In turn this means that the (relatively light) synchronisers operate more quickly than in prior art transmissions, with the result that overall the shifting time is reduced.

The integral nature of the linking gears furthermore gives rise to a compact arrangement.

As a result drive input via the input drive shaft readily may be transmitted via the odd gears shaft or the even gears shaft, depending on the settings of the odd and even gears clutches.

It is also preferable that the input drive shaft extends along the transmission generally parallel to the odd gears shaft and the even gears shaft that extend generally parallel to one another. This confers an efficient arrangement on the DCT of the invention, with a minimal number of gears required to link the parts that are required from time to time to drive one another.

Preferably the rotatable output member of the odd gears clutch is or includes a housing of the odd gears clutch; and also preferably the rotatable output member of the even gears clutch is or includes a housing of the even gears clutch.

Thus the input drive advantageously may be applied to cause rotation of two of the heavier parts of the DCT, thereby providing a good reduction in the duty of the synchronisers. Since a DCT intended for use in a heavy working vehicle typically includes at least four synchronisers this is a significant saving.

The DCT's designed for use in cars typically have the two clutches arranged concentrically one inside the other, with the transmission branches also concentrically arranged. It is believed that the linking gear(s) of the invention can be designed to provide the transfer of drive between the clutch housings of such a DCT design; but the linking gear(s) may be particularly readily embodied in a DCT in which the odd and even gears branches extend alongside one another as is usually the case in a heavy working vehicle.

Conveniently the rotatable linking gear gives rise to a non-unitary gear ratio between the rotatable output members of the odd gears and even gears clutches. A significant advantage of this aspect of the DCT of the invention is that the components of the two branches can be made identical to one another with the linking gears providing for different ratios as between sequentially adjacent odd and even gears.

This means that e.g. the gearwheels of the respective branches in particular can be made identical to one another, with significant savings on costs both at the manufacturing stage and also when carrying out maintenance or repair on the DCT of the invention. In this regard in prior art DCT's the individual gears must all be made with mutually differing numbers of teeth in order to avoid the duplication of gear ratios e.g. between the odd and even gears branches of the transmission. This renders the prior art DCT's somewhat expensive to build and also means that a large range of spare parts must be provided for maintenance and repair purposes. The inventory of spare gearwheels may be reduced by 50% through the benefit, of the invention, in permitting some duplication of the gears on the respective shafts.

In preferred embodiments of the invention each even-numbered gear is freely rotatable on the odd gears shaft and the transmission includes at least one odd gear selector that fixes a selected odd-numbered gear at a time to the odd gears shaft. Further preferably the or each odd gear selector includes a respective synchroniser for synchronising the speed of rotation of the odd gears shaft and each of two selectable odd-numbered gears. Yet further preferably each odd gear selector includes a dog clutch arrangement that is selectively engageable with two odd gears on a respective basis and a spline arrangement permitting movement of the selector along the odd gears shaft while preventing rotation of the selector relative to the odd gears shaft, thereby permitting selective fixing of a selected odd gear at a time to the even gears shaft.

Counterpart features to the foregoing preferably are also provided in respect of the even-numbered gears in the branch in which they are provided.

The foregoing features are known *per se* in DCT's. The principles of the invention require relatively little in terms of re-designing of existing DCT's and yet as noted provide significant benefits.

Conveniently for the odd gears clutch and the even gears clutch the forward ratio rotatable input member being drivingly engaged with the input shaft whereby rotation of the forward ratio rotatable the input member selectively causes rotation of the input member of the odd gears clutch and the even gears clutch in a rotationally forward direction. As a result the DCT of the invention may readily provide for selection of forward or reverse ratio ranges. The forward and reverse ratio ranges may in consequence each include the same number of gear ratios

The forward and reverse ratio ranges may differ when transmission input is directed to the forward and reverse clutch. Meaning that depending on the difference in gear ratio between the input gear of the forward clutch and the input gears of the reverse clutch the vehicle speed can be faster or slower in a forward gear when compared to its respective reverse gear.

This aspect of the invention is particularly beneficial since it completely obviates the need for a reversing gear module that has hitherto been needed in prior art DCT's in order to provide for a reverse gear selection.

Further conveniently the even gears clutch includes a selectively releasable forward drive clutch connecting the rotatable even gears input member to the remainder of the even gears clutch; and the odd gears clutch includes a selectively releasable reverse drive clutch connecting the rotatable odd gears input member to the remainder of the odd gears clutch. Thus the even and odd gears clutches beneficially may be used to control the selection of forward gear ratios.

Preferably the transmission of the invention includes a reverse ratio rotatable input member for the odd gears clutch and the even gears clutch, the reverse ratio rotatable input member being drivingly engaged with the forward ratio rotatable input member whereby selectively to cause rotation of the input member of the odd gears clutch and the even gears clutch in a rotationally reverse direction.

Advantageously to this end preferably the forward drive clutch and the reverse drive clutch operate on a mutually exclusive basis whereby only one said clutch transfers drive at a time. This ensures that it is not possible to select forward and reverse gear ratio ranges at the same time.

### Brief Description of the Drawings

There now follows a description of a preferred embodiment of the invention, by way of non-limiting example, with reference being made to the accompanying drawings in which:
Figure 1 is a schematic view showing the layout of one form of DCT according to the invention;
Figure 2 is a view similar to Figure 1 showing the configuration of the DCT and the drive path when first gear is selected;
Figure 3 is a variant on Figure 2 showing the DCT configuration and drive path when second gear is selected;
Figure 4 is a view similar to Figures 1 to 3 highlighting the minimal number of parts required to be synchronised when e.g. second gear is selected; and
Figure 5 is a further schematic view of the DCT showing in conceptual terms the main functional parts.

### Detailed Description of the Drawings

Referring to the drawings a DCT 10 according to the invention is shown in schematic form.

DCT 10 in essence comprises a central rotatable input shaft 11 that via respective odd gears clutch 12 and even gears clutch 13 transfers drive either via an odd gears branch 14 located to one side of the input shaft 11 or via an even gears branch 16 located in the embodiment shown to the other side of the input shaft 11. The clutches 12, 13 are in the embodiment shown so-called *"dry plate"* clutches, as is commonplace in DCT technology. Other forms of clutch however, including multi-plate *"wet"* clutches may be possible within the scope of the invention.

In the embodiment shown the odd gears branch 14 includes four gears 17, 18, 19, 21 (i.e. 1^{st} gear, 3^{rd} gear, 5^{th} gear and 7^{th} gear) carried on odd gears shaft 44; and even gears branch 16 includes four gears 22, 23, 24 and 26 (i.e. 2^{nd} gear, 4^{th} gear, 6^{th} gear and 8^{th} gear) carried on even gears shaft 46. Other numbers of gears are however possible within the scope of the invention, depending on the precise duty requirement of the transmission 10. It is not necessary for the numbers of gears on the respective shafts to be the same, although it is not desirable in a working DCT for there to be a wide disparity in the numbers of gears carried by each shaft.

Each shaft 14, 16 also carries two synchronisers 27, 28, 29, 31. The gears 17, 18, 19, 21, 22, 23, 24 and 26 are free to rotate on the respective shaft 44, 46 on which they are supported unless acted on, as described below, by one of the synchronisers in order to providing for locking of the gears to the shafts.

Input shaft 11 is connected at one end 11a, designated the *"front"* end because of its adjacency to the vehicle engine that typically is front-mounted to e.g. the crankshaft of the engine of the vehicle in which the DCT 10 is installed. The *"rear"* end 11b of the DCT 10 is designated in conformity with the foregoing and can serve as input to a PTO gearbox.

Over the remainder of its length, extending rearwardly towards rear end 11b, input shaft 11 is journalled (i.e. supported in bearings that permit rotation) at intervals determined by the transmission design such that it is rotatable about its longitudinal axis. In the embodiment of the invention illustrated in the drawings the input shaft 11 extends over the entire length of the DCT 10, to serve as PTO shaft. As a result an output shaft 32 (described in more detail below) may be journalled on the exterior of the idler shaft 11 as illustrated.

Adjacent end 11a input shaft 11 carries an input drive gear 33 that is locked to the input shaft 11 and is drivingly meshed with a forward clutch gear 34. Forward clutch gear 34 may be formed as e.g. externally encircling the housing of the front section 36 of a first additional clutch 37 designated the *"forward drive"* clutch by reason of its role in engaging forward drive of the vehicle, as described further herein.

Front section 36 of forward drive clutch 37 is releasably coupled by way of a selectively mutually engageable clutch parts 38 of *per se* known kinds to a rear section 39.

Rear section 39 is locked to the front half 41 of even gears clutch 13. This can be achieved e.g. by forming rear section 39 integrally with front half 41, or by other means such as but not limited to splines or fasteners as will occur to the worker of skill in the art.

The rear half 42 of even gears clutch is releasably connected at its front end via clutch parts 43 to front half 41, and is locked to even gears shaft 46.

Even gears shaft 46 extends rearwardly from the vicinity of forward drive clutch 37 parallel to input shaft 11. 2^{nd} gear 22, 4^{th} gear 23, 6^{th} gear 24 and 8^{th} gear 26 are mounted at intervals along even gears shaft 46 in the aforementioned sequence counted from the rear end of shaft 44 towards the front end of the DCT 10. Each of the gears 22, 23, 24 and 26 is secured so as to be freely rotatable on the even gears shaft 46 when not acted on by one of the synchronisers 29, 31 but also constrained against longitudinal movement on the even gears shaft 46. Typically the gears 22, 23, 24 and 26 have mutually differing numbers of teeth in order to provide for differing, even-numbered transmission ratios.

Synchroniser 29 is mounted on even gears shaft 46 between 2^{nd} gear 22 and 4^{th} gear 23, and is moveable longitudinally along even gears shaft 46.

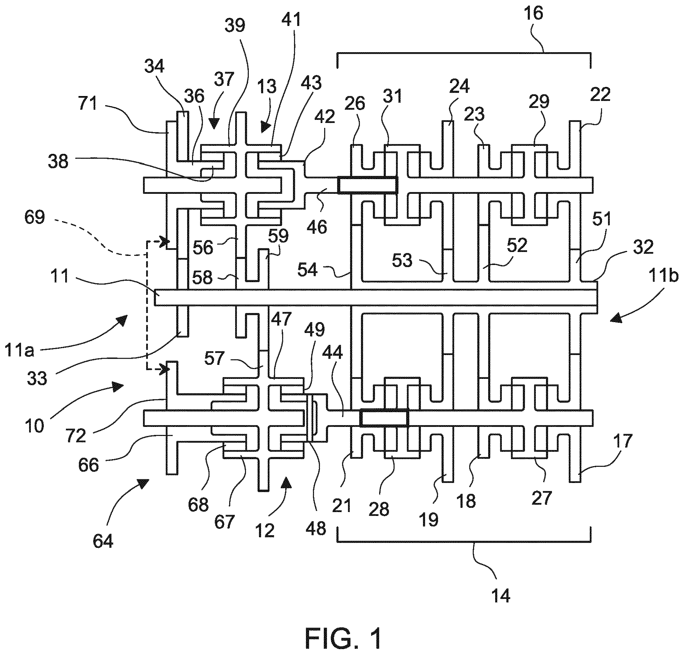

The design and length of the synchroniser 29 are such that it is capable of engaging only one of the gears 22, 23 at a time. Thus is if the synchroniser 29 is moved rearwardly on shaft 44 (i.e. to the right in Figure 1) it engages 2^{nd} gear 44; and if it is moved forwardly (to the left in the figure) it engages 4^{th} gear 23. As explained above, synchroniser 29 is non-rotatable with respect to shaft 44 e.g. because of a splined mounting. As synchroniser engages either 2^{nd} gear 22 or 4^{th} gear 23 the gear in question becomes locked to shaft 44 in a *per se* known manner.

Synchroniser 31 is mounted on shaft 44 between 6^{th} gear 24 and 8^{th} gear 26, and acts in a similar manner to synchroniser 29. For this reason its operation will not be described in detail herein.

Odd gears shaft 44 is similar in construction to even gears shaft 46 in having mounted at its front end odd gears clutch 12 having a front half 47 and rear half 48 that are selectively drivingly engageable with one another through engagement and releasing of clutch parts 49. Front half 47 receives rotary drive from and is caused to rotate in a manner described below.

Odd gears shaft 44 has rotatably mounted on it in sequence counted from the rear of DCT 10 1^{st} gear 17, 3^{rd} gear 18, 5^{th} gear 19 and 7^{th} gear 21. Synchroniser 27 is located between 1^{st} gear 17 and 3^{rd} gear 18; and synchromiser 28 is located between 5^{th} gear 19 and 7^{th} gear 21. The basic details of the gears 17, 18, 19 21 and the synchronisers 27 and 28 are similar to those of the gears and synchronisers of the even gears shaft 46 and therefore will not be described further herein.

Output shaft 32 has mounted on its exterior 1^{st} - 4^{th} (as counted in sequence from the rear of DCT 10) output gears 51 - 54 spaced at intervals from one another. Each of the output gears 51 - 54 is permanently locked to the output shaft 32 for co-rotation therewith.

1^{st} gear 17, 2^{nd} gear 22 and 1^{st} output gear 51 are aligned longitudinally with one another along the respective shafts 46, 44 and 32 on which they are mounted. The diameters and numbers of teeth on the gears 17, 22 and 51 are such that output gear 51 is permanently meshed with 1^{st} gear 17 and 2^{nd} gear 22.

3^{rd} gear 18, 4^{th} gear 23 and 2^{nd} output gear 52 are similarly mutually aligned on the shafts 46, 44, 32 and are also dimensioned such that 2^{nd} output gear 52 is permanently meshed with the gears 18 and 23.

5^{th} gear 19, 6^{th} gear 24 and 3^{rd} output gear 53 are in like manner aligned and dimensioned such that 3^{rd} output gear 53 is permanently meshed with the gears 19 and 24.

7^{th} gear 21, 8^{th} gear 26 and 4^{th} output gear 54 are in like manner aligned and dimensioned such that 4^{th} output gear 54 is permanently meshed with the gears 21 and 26.

It will be appreciated therefore that if even gears clutch 13 is engaged and odd gears clutch 12 is disengaged any drive input to the front halves 41, 47of the clutches 13, 12 will cause the even gears branch 16 to be driven, with the odd gears branch 14 essentially un-powered via the odd gears clutch. Similarly if the even gears clutch 13 is disengaged and the odd gears clutch 12 engaged the transfer of drive input to the front halves 41, 47 of the clutches 13, 12 causes driving of the odd gears branch 14 with the even gears branch 16 unpowered.

In the unpowered branch (either branch 14 or branch 16, depending on the clutch settings) the gears rotate on the respective shaft by reason of engagement with the output gears 51, 52, 53, 54; but in the absence of the application of rotational energy to the supporting shaft 44 or 46 this is merely idling rotation that does not transfer any drive to the output shaft 32.

The selection of a prevailing gear ratio in this arrangement is determined by the statuses of the synchronisers 27, 28, 29, 31. The control software for the DCT is such that at most only two of the gears 17, 18, 19, 21, 22, 23, 24, 26 at a time may be locked to their supporting shafts 44, 46. The software moreover ensures that once a gear supported by a driven (powered) shaft is so locked a second gear on the same shaft cannot also be locked since this would result in one and the same branch of the DCT attempting simultaneously to select two different gear ratios. This would almost certainly cause damage to the DCT, so the control regime ensures that if a second gear is to be locked it is mounted on the other, unpowered shaft in a pre-selection step as described herein.

A gear 11, 18, 19, 21, 22, 23, 24 or 26 of a powered shaft 44 or 46 that is locked by one of the synchronisers to its shaft transmits drive to the output shaft 32 with a ratio determined by the relative number of teeth of the thus locked gear and the meshed output gear 51, 52, 53, 54. The remaining gears of the powered shaft 44 or 46 remain rotatable relative to the shaft in an idling manner without transmitting power, by reason of not being locked to the shaft.

The software also ensures that the odd gears clutch 12 and the even gears clutch 13 operate on a mutually exclusive basis. As a result only one of the clutches 12, 13 may be engaged at a time, although the time between disengagement of one clutch 12, 13 and the engagement of the other clutch 12, 13 during sequential shifts as noted may be extremely short.

The majority of the foregoing features amount to the essential elements of a DCT. The DCT of the invention thus includes an even gears clutch 13 and an associated even gears shaft 46 supporting at least two even-numbered rotary gears 22, 23, 24, 26, the even gears clutch 13 being for transmitting rotary input drive via a selected one of the even-numbered rotary gears 22, 23, 24, 26 to a transmission output component 32; an odd gears clutch 12 and an associated odd gears shaft 44 supporting at least two odd-numbered rotary gears 17, 18, 19, 21, the odd gears clutch 12 being for transmitting rotary input drive via a selected one of the odd-numbered rotary gears 17, 18, 19, 21 to the output component 32, the transmission output component 32 being selectively connectable to one respective said even- or odd-numbered gear 17, 18, 19, 21, 22, 23, 24, 26 at a time and the even and odd gears clutches 13, 12 being arranged to transmit drive on a mutually exclusive basis.

The exteriors of the housings of the front halves 41, 47 of the respective even and odd gears clutches 13, 12 are formed with external rotating output members that in the embodiment shown are respective ring gears 56, 57 that are locked to the housings on which they are mounted. The rotating output members may however in other embodiments of the invention take forms other than the ring gears schematically illustrated in the figures.

Input shaft 11 supports adjacent to the even gears clutch 13 and odd gears clutch 12 a pair of linking gears 58, 59 that are spaced from one another longitudinally along the input shaft 11.

The linking gears 58, 59 are rotatably mounted on the input shaft 11. Front (even gears) linking gear 58 is permanently meshed with the ring gear 56 supported by the front half 41 of even gears clutch 13; and rear (odd gears) linking gear 59 is similarly meshed with ring gear 57 of front half 47 of odd gears clutch 12.

In the embodiment illustrated the gear ratio between on the one hand gears 56 and 58 and on the other hand gears 57 and 59 is not the same. As a consequence and as described below the input drive to the respective branches 16, 14 of the DCT 10 is associated with differing ratio ranges. In turn this means it is not necessary for each of the 1^{st} to 8^{th} gears 17, 18, 19, 21, 22, 23, 24 and 26 to have different numbers of teeth. On the contrary, 1^{st} and 2^{nd} gears 17 and 22 may be of the same size, 3^{rd} and 4^{th} gears 18 and 23 may be of the same size that is different from the size of gears 17 and 22 and so on for all the gears on the shafts 44, 46. As a result of the differing ratios represented by meshing respectively of the linking gears 58 and 59 with the associated ring gears 56 and 57 the outputs of the different selected gears differ from one another notwithstanding that there is some duplication of gear parts in the transmission. This results in reduced construction costs, savings on spares inventories and reduces inertia that must be synchronized. Linking gears 58 and 59 can be designed as a double gear.

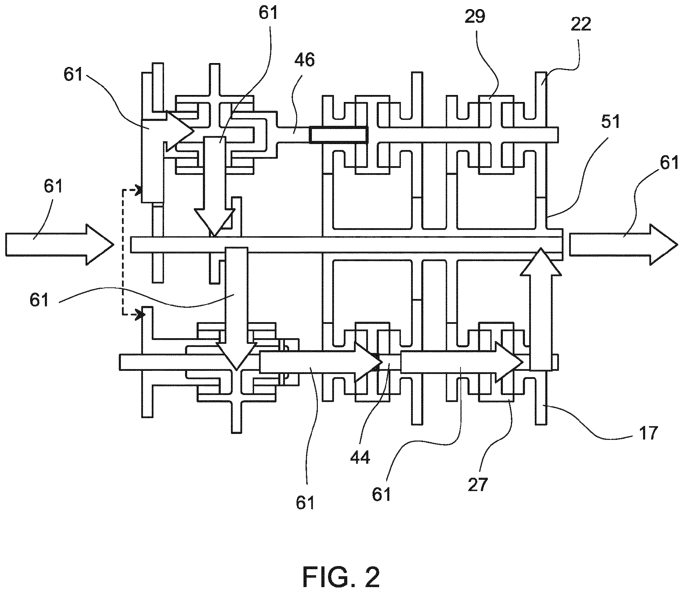

Use of the parts of the DCT 10 thus far described to effect selection of 1^{st} gear 17 and shifting to 2^{nd} gear 22 will now be described with reference to Figures 2, 3 and 4.

As mentioned the input shaft 11 is connected to the crankshaft of the engine or other prime mover (which instead of being a compression ignition engine in some embodiments of the invention could be e.g. an electric motor) of a vehicle. In a typical agricultural application such as a tractor, harvesting machine or loader the engine would be a multi-cylinder diesel engine. The engine causes uninterrupted rotation of the input shaft 11 when it is running.

Rotation of input shaft 11 causes rotation of forward clutch gear 34. This in turn causes rotation of the front half 36 of the housing forward drive clutch 37. When forward drive clutch 37 is engaged the rear half 39 of the housing of forward drive clutch 37 is also caused to rotate.

Since ring gear 56 is locked to the exterior of the rear half 39 of the housing of forward drive clutch 37, engagement of forward drive clutch 37 causes rotation of ring gear 56. As mentioned, ring gear 56 is meshed with linking gear 58 which therefore is caused to rotate supported on input shaft 11.

Linking gear 58 is locked to linking gear 59, which therefore at such a time rotates with linking gear 58. Linking gear 59 is meshed with ring gear 57 that is locked on the exterior of the front half 47 of odd gears clutch 12.

When forward drive clutch 37 is engaged as described in the foregoing section the DCT 10 may be considered as being in a neutral condition when both the odd gears clutch 12 and the even gears clutch 13 are disengaged. At this moment the housing of the forward drive clutch 37 and even gears clutch 13, which may be integral, rotate and drive linking gears 58 and 59 through ring gear 56, while linking gears 58 and 59 further drive ring gear 57 and thus housing of the odd gears clutch 12.

Selection of 1^{st} gear 17 occurs as a result firstly of engagement of the forward drive clutch 37. This can be as a result of e.g. operation of a solenoid or operation of a hydraulic actuator. The inclusion of a solenoid actuator is likely to be preferred in the majority of applications.

Such engagement of forward drive clutch 37 results in rotation of ring gear 56, linking gears 58 and 59 and ring gear 57. The latter rotational speed is determined by the gear ratio between linking gears 58 and 59.

Once the housing of odd gears clutch 12 and even gears clutch 13 rotate selector 27 is moved to the right on odd gears shaft 44 as viewed in Figures 1 to 4. Such movement also may be under the influence of e.g. a solenoid or hydraulic actuator. Movement of the synchroniser 27 in this way locks 1^{st} gear 17 to odd gears shaft 44.

In controllably engaging odd gears clutch 12 odd gears shaft 44 progressively accelerates where 1^{st} gear 17 becomes fully locked and drives output shaft 32 through gear 51..

At this point the rotational drive input at front end 11a of input shaft 11 is transmitted as illustrated by arrows 61 (see Figure 2) via odd gears clutch 12, shaft 44 and 1^{st} gear 17. Since 1^{st} gear 17 is meshed with output gear 51 the drive is output via output shaft 32 to which output gear 32 is locked.

While 1^{st} gear 17 is engaged the other gears carried by odd gears shaft 44 (i.e. 3^{rd} gear 18, 5^{th} gear 19 and 7^{th} gear 21) are disengaged since they are not locked to shaft 44. As a result these gears are freely rotatable on odd gears shaft 44.

The even gears 22, 23, 24 and 26 are also freely rotatable at this time on even gears shaft 46.

Since as is preferred operation of the forward drive clutch 37, odd gears clutch 12 and the synchroniser 27 is under the influence of solenoids the selection process can take place very quickly (e.g. in a few milliseconds). Moreover the control software for the solenoids may take account of sensed variables such as the vehicle throttle setting, vehicle speed (which in the scenario just described, of selecting 1^{st} gear 17, is likely initially to be zero or very low), any incline on which the vehicle is moving, whether the vehicle is towing e.g. a trailer or implement, and a range of other variables as will be known to the person of skill in the art. Such software features may at times result in prohibition of certain gear ratios. An example occurs if the vehicle speed is low. At such a time shifting to a high gear such as 7^{th} gear 21 or 8^{th} gear 26 may exceed the torque capability of the engine. In such circumstances the software may prevent the selection of 7^{th} and 8^{th} gear in order to reduce the risk of stalling the vehicle engine.

In heavy duty applications such as tractors pulling trailers taking off from standstill may require a lot of energy to be dissipated through the clutches. The forward drive clutch 37 may be dimensioned to be able to dissipate this energy. As a result the sequence of clutches and synchronizers maybe altered. The operator or the SW may select a take-off gear with the associated off or even gears clutch 12 and 13 engaged and then modulating forward drive clutch 37 to take-off.

Selection of 2^{nd} gear 22 following selection of 1^{st} gear 17 follows a similar process to that described above.

In more detail, the selection of 1^{st} gear 17 in addition to the transfer of rotational drive via the path represented by arrows 61 causes rotation of 2^{nd} gear 22, by reason of meshing of output gear 51 with 2^{nd} gear 22.

Initially in this sequence 2^{nd} gear 22 is freely rotatable on even gears shaft 46. Selection of 2^{nd} gear involves movement of the synchroniser 29 mounted adjacent 2^{nd} gear 22 to the right as viewed in the figures, under the control of e.g. a solenoid or hydraulic actuator.

This causes (a) locking of 2^{nd} gear 22 to even gears shaft 46; and (b) acceleration of even gears shaft 46, i.e. synchronisation of the speed of this shaft with that of 2^{nd} gear 22. At this point even gears clutch 13 is disengaged but once locking of 2^{nd} gear 22 to even gears shaft 46 occurs and the preselection steps are complete transfer of the drive path from the odd gears shaft 44 to the even gears shaft 46 may occur.

Acceleration of parts of the transmission during synchronising in this way is a relatively light duty activity compared with prior art DCT's because it is necessary only to accelerate the mass of even gears shaft 46 and the rear half 42 of even gears clutch 13. The gears 23, 24 and 26 are not accelerated because they are not locked to even gears shaft 46.

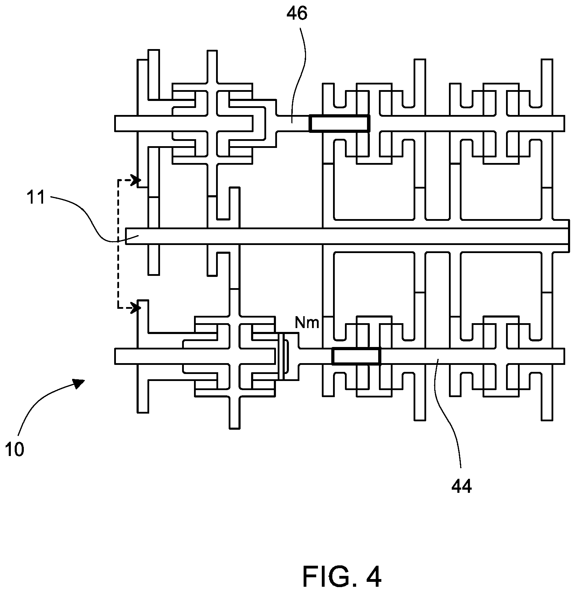

This is illustrated schematically in Figure 4, which illustrates through shading the mass of rotating parts requiring acceleration when one of the even-numbered gears 22, 23, 24 or 26 is selected. One may produce a similar image illustrating the (relatively minimal) mass of odd gears shaft 44 requiring acceleration when one of the odd gears 17, 18, 19, 21 is selected.

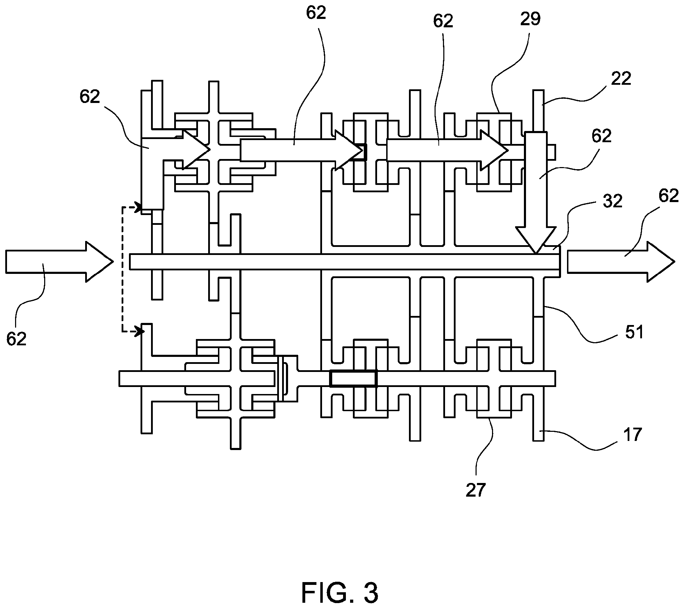

The indicated drive transfer takes place through disengagement of odd gears clutch 12 just momentarily before engagement of the engageable parts 43 of even gears clutch 13 occurs, again under the control of the transmission software and any actuators such as solenoids or hydraulic actuators. Such steps result in de-powering of odd gears shaft 44 and the transfer of drive via even gears shaft 46, 2^{nd} gear 22 and output gear 32 as signified by arrows 62 in Figure 3.

The gear ratio of the path represented by arrows 62 is incrementally higher than that represented by arrows 61. As noted this may be as a result of differing sizes of the 1^{st} and 2^{nd} gears 17, 22. More preferably however these gears are of the same size, and the desired ratio difference instead results from the linking gears 58, 59 conferring a different ratio on the drive path between the input shaft 11 and the odd gears shaft 44 on the one hand from the more direct path between the input shaft 11 and even gears shaft 46 on the other.

Following the foregoing steps preselection of 3^{rd} gear 18 may occur through movement of synchroniser 27 to the left as viewed in the figures. This unlocks 1^{st} gear 17 from odd gears shaft 44 and synchronises the speed of odd gears shaft 44 and 3^{rd} gear 18 by reason of progressive engagement of projections on the left hand side of synchroniser 27 with 3^{rd} gear 18 before locking of 3^{rd} gear 18 to odd gears shaft 44 is completed.

At this point drive may be transferred from even gears shaft 46 back to odd gears shaft 44 through a reversal of the clutch sequence described above.

Further preselection and drive transfer steps may take place in a similar manner in order to cause sequential engagement of each gear in turn, with the drive path alternating between the odd gears and even gears until the 8^{th} gear 26 is engaged. At this point a ratio transfer box if present can be activated to move the entire range of ratios of the transmission 10 to a higher range. This permits re-commencement of the gear engagement sequence, typically starting again with engagement of 1^{st} gear 17 once the higher ratio range has been selected. The only difference at this point compared with the process described above in relation to the selection of 1^{st} gear 17 is that by this stage the odd gears shaft will be rotating, whereas at the very start of operation of the DCT 10 it is stationary

Through essentially a reversal of the steps described above it is possible to effect sequential downshifting through the transmission ratios represented by the gears 17, 18, 19, 21, 22, 23, 24 and 26. It is not necessary for upshifting through to 8^{th} gear 26 to occur before downshifting commences; and it is not necessary for downshifting all the way to selection of 1^{st} gear 17 to occur before upshifting recommences. On the contrary the DCT 10 may swap between upshifting and downshifting at any point.

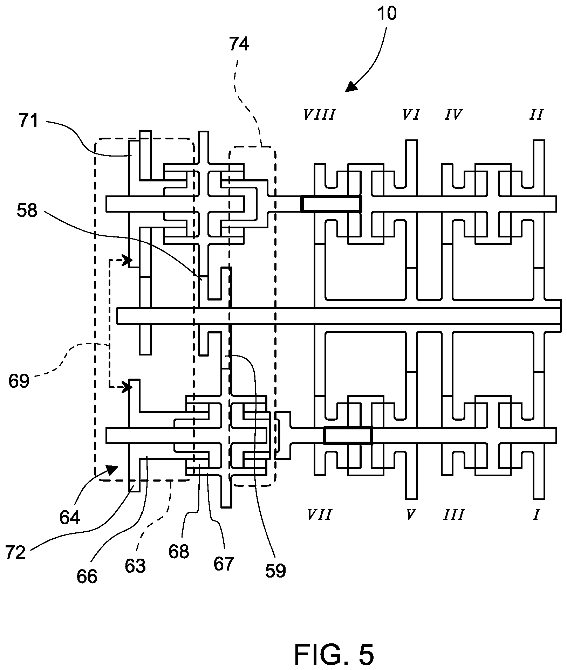

A further important aspect of the invention relates to the provision of a power shuttle represented schematically by numeral 63 in Figure 5 that is integral with the remainder of the DCT 10. Figure 5 also identifies the essential sections of transmission 10 that provide a DCT effect, through use of reference numeral 74.

Power shuttle 63 permits the rapid transformation of the DCT 10 between forward and reverse gear ratios. In prior art DCT's this must be achieved through the inclusion of a separate power shuttle module, that is relatively expensive and that adds mass to the DCT.

The power shuttle 63 in the preferred embodiment of the invention includes, in addition to the parts described so far, reverse drive clutch 64 having a front housing 66, rear section 67 and clutch parts 68 in a similar manner to forward drive clutch 37. Power shuttle 63 furthermore includes a power shuttle gear train represented schematically by dotted lines 69.

Front housing 36 of forward drive clutch 37 and front housing 66 of reverse drive clutch each includes encircling its exterior a respective forward ratio and reverse ratio rotatable input member in the form of a ring gear 71, 72. In preferred embodiments of the invention the ring gears 71, 72 mesh with each other and are coplanar with one another to form a shuttle gear train 69.

The nature of the shuttle gear train 69 is to reverse the direction of rotation of drive input at one end so that the output is oppositely directed rotation (i.e. in a *"rotationally reverse"* direction as referred to herein) at the other end of the shuttle gear train 69. Particular dimensioning of ring gears 71 and 72 may result in a different gear ratio of front housing 36 of forward clutch 37 compared to the gear ratio of front housing 66 of reverse clutch 64. This may result in a vehicle speed difference between a selected forward gear and its respective reverse gear.

Control of the power shuttle 63 is such that when forward drive clutch 37 is engaged, reverse drive clutch 64 is disengaged. At such a time drive input to input shaft 11 is transmitted via input gear 33, that is permanently locked to input shaft 11, to forward clutch gear 34 with which input gear 33 is permanently meshed. Forward clutch gear 34 is locked to the front housing of forward drive clutch 37 with the result that input drive passes to even gears clutch 13 and thence either to even gears shaft 46 via engaged clutch parts 43; or to odd gears shaft 44 via linking gears 58, 59 if even gears clutch 13 is disengaged and odd gears clutch 12 is engaged. Both of these conditions result in rotation of e.g. the output shaft 32 in a *"rotationally forward"* direction as referred to herein.

As noted when forward drive clutch 37 is engaged, reverse drive clutch 64 is disengaged but drive to the DCT 10 may readily be reversed by disengaging forward drive clutch 37 and engaging reverse drive clutch 64. The shuttle gear train 69 then results in the drive input to input shaft 11 and gear 33 being reversed as an input to reverse drive clutch 64, which then transfers drive either to odd gears shaft 44 if odd gears clutch 12 is engaged and even gears clutch is disengaged; or via linking gears 58, 59 and even gears clutch 13 to even gears shaft 46 if the engagement configuration of the clutches 12, 13 is reversed. When driving in reverse the direction of rotation of the housing of all clutches 12, 13, 37, 57 is reversed compared to when driving forward.

The reversal of the direction of travel is typically achieved by providing a shuttle shift lever to the operator.

As a consequence of this arrangement the DCT 10 may provide the same number of selectable transmission ratios when reverse drive is selected as when forward drive is selected. As a practical matter however the control software optionally may be set up to limit the number of gears that are selectable when reverse drive is engaged, in order to limit the vehicle ground speed that may be attained when travelling in reverse. This effect may in turn be achieved by e.g. ensuring that only for example the synchronisers 27, 29 are able to receive power when reverse drive is engaged.

A notable benefit of the power shuttle 63 of the invention is that the forward and reverse drive clutches 37, 64 may be manufactured as identical items. This significantly reduces manufacturing costs and spares inventory costs.

Moreover the odd gears clutch 12 and even gears clutch 13 can be identical to one another, giving rise to similar manufacturing and spares inventory benefits. The odd gears clutch 12 can be made as a module with the reverse drive clutch 64; and the even gears clutch 13 and the forward drive clutch 37 are also capable of being integrated as a modular assembly. Such benefits further reduce inventory and manufacturing costs, and also permit reductions in scheduled vehicle servicing times, giving rise to cost savings for vehicle operators.

The odd gears shaft 44 and the even gears shaft 46 may also be manufactured as identical, modular components with the various gears and synchronisers pre-installed. The gears and synchronisers of the two shafts 44, 46 as noted may be identical to one another, with the difference in ratio between e.g. 1^{st} gear 17 and 2^{nd} gear 22 resulting from the ratio difference conferred by linking gears 58, 59. These gears in effect define a first ratio range for the gears on odd gears shaft 44 and a second, different ratio range for the gears on even gear shaft 46 even though the numbers of teeth of the 1^{st} and 2^{nd} gears 17, 22 are identical, the numbers of teeth of the 3^{rd} and 4^{th} gears 18, 23 are identical and so on.

Although the linking gears 58, 59 are shown in Figure 1 as siamesed gears rotatably supported on input shaft 11, in other embodiments of the invention the linking effect may be achieved through more or fewer linking gears as desired.

As signified schematically by Figure 4 the power shuttle components represented generally by numeral 63 typically are provided in one and the same DCT 10 as the described DCT parts 74. For the avoidance of doubt however it is made clear that the power shuttle parts 63 and the DCT parts 74 can be provided individually in a DCT, without a requirement for both features to be present.

Overall the DCT 10 of the invention provides significant benefits that are not available using prior art DCT's. The DCT 10 therefore represents a major improvement over the prior art.

## Claims

1. A dual-clutch transmission (10), for a vehicle, comprising an odd gears clutch (12) and an associated odd gears shaft (44) supporting at least two odd-numbered rotary gears (17, 18, 19, 21), the odd gears clutch (12) being for transmitting rotary input drive via a selected one of the odd-numbered rotary gears (17, 18, 19, 21) to a transmission output component (32); an even gears clutch (13) and an associated even gears shaft (46) supporting at least two even-numbered rotary gears (22, 23, 24, 26), the even gears clutch (13) being for transmitting rotary input drive via a selected one of the even-numbered rotary gears (22, 23, 24, 26) to the output component (32), the transmission output component (32) being selectively connectable to one respective said odd- or even-numbered gear at a time and the odd and even gears clutches (12, 13) being arranged to transmit drive on a mutually exclusive basis, wherein odd gears clutch (12) and the even gears clutch (13) each include a rotatable output member (57, 56), the rotatable output members (57, 56) of the respective clutches being linked by at least one rotatable linking gear (58, 59) that is integral with the transmission,
**characterized in that** said dual-clutch transmission (10) further including an input drive shaft (11), the at least one rotatable linking gear (58, 59) being rotatably mounted on the input drive shaft (11).

2. A dual-clutch transmission (10) according to Claim 1 wherein the input drive shaft (11) extends along the transmission parallel to the odd gears shaft (44) and the even gears shaft (46) that extend parallel to one another.

3. A dual-clutch transmission (10) according to any preceding claim wherein the rotatable output member (57) of the odd gears clutch (12) is connected to or includes a housing (47) of the odd gears clutch (12) and wherein the rotatable output member (56) of the even gears clutch (13) is connected to or includes a housing (41) of the even gears clutch (13).

4. A dual-clutch transmission (10) according to any preceding claim wherein the at least one rotatable linking gear (58, 59) gives rise to a non-unitary gear ratio between the rotatable output members (57, 56) of the odd gears and even gears clutches (12, 13).

5. A dual-clutch transmission (10) according to any preceding claim wherein each odd-numbered gear (17, 18, 19, 21) is selectively freely rotatable on the odd gears shaft (44) and wherein the transmission (10) includes at least one odd gear selector (27, 28) that fixes a selected odd gear at a time to the odd gears shaft (44).

6. A dual-clutch transmission (10) according to any preceding claim wherein each even-numbered gear (22, 23, 24, 26) is selectively freely rotatable on the even gears shaft (46) and wherein the transmission (10) includes at least one even gear selector (29, 31) that fixes a selected even gear (22, 23, 24, 26) at a time to the even gears shaft (46).

7. A dual-clutch transmission (10) according to any preceding claim wherein the transmission output component (32) includes at least one output gear (51, 52, 53, 54) linking a said odd-numbered gear (17, 18, 19, 21) and a said even-numbered gear (22, 23, 24, 26) whereby to transfer rotation between gears supported respectively by the odd and even gears shafts (44, 46).

8. A dual-clutch transmission (10) according to any preceding claim including a forward ratio rotatable input member (71) for the odd gears clutch (12) and the even gears clutch (13) the forward ratio rotatable input member (71) being drivingly engaged with the input shaft (11) whereby rotation of the forward ratio rotatable input member (71) selectively causes rotation of the input member of the odd gears clutch (12) and the even gears clutch (13) in a rotationally forward direction.

9. A dual-clutch transmission (10) according to Claim 8 wherein the even gears clutch (13) includes a selectively releasable forward drive clutch (37) connecting the rotatable even gears input member (71) to the remainder of the even gears clutch (13).

10. A dual-clutch transmission (10) according to Claim 8 or Claim 9 including a reverse ratio rotatable input member (72) for the odd gears clutch (12) and the even gears clutch (13), the reverse ratio rotatable input member (72) being drivingly engaged with the forward ratio rotatable input member (71) whereby selectively to cause rotation of the input member of the odd gears clutch (12) and the even gears clutch (13) in a rotationally reverse direction.

11. A dual-clutch transmission (10) according to Claim 10 wherein the odd gears clutch (12) includes a selectively releasable reverse drive clutch (64) connecting the rotatable odd gears input member (72) to the remainder of the odd gears clutch (12).

12. A dual-clutch transmission (10) according to Claims 9 and 10 wherein the forward drive clutch (37) and the reverse drive clutch (64) operate on a mutually exclusive basis whereby only one said clutch transfers drive at a time.

## Patentansprüche

1. Doppelkupplungsgetriebe (10) für ein Fahrzeug, mit einer Kupplung für ungerade Gänge (12) und einer zugehörigen Welle für ungerade Gänge (44), die mindestens zwei ungeradzahlige Zahnräder (17, 18, 19, 21) trägt, wobei die Kupplung für ungerade Gänge (12) dazu dient, einen Dreheingangsantrieb über ein ausgewähltes der ungeradzahligen Zahnräder (17, 18, 19, 21) auf eine Getriebeausgangskomponente (32) zu übertragen; mit einer Kupplung für gerade Gänge (13) und einer zugehörigen Welle für gerade Gänge (46), die mindestens zwei geradzahlige Zahnräder (22, 23, 24, 26) trägt, wobei die Kupplung für gerade Gänge (13) dazu dient, einen Dreheingangsantrieb über ein ausgewähltes der geradzahligen Zahnräder (22, 23, 24, 26) auf die Ausgangskomponente (32) zu übertragen, wobei die Getriebeausgangskomponente (32) selektiv mit jeweils einem ungeradzahligen oder geradzahligen Zahnrad verbindbar ist und die Kupplungen für ungerade und gerade Gänge (12, 13) derart angeordnet sind, dass sie den Antrieb auf einer sich gegenseitig ausschließenden Basis übertragen, wobei die Kupplung für ungerade Gänge (12) und die Kupplung für gerade Gänge (13) jeweils ein drehbares Ausgangselement (57, 56) aufweisen, wobei die drehbaren Ausgangselemente (57, 56) der jeweiligen Kupplungen durch mindestens ein drehbares Verbindungszahnrad (58, 59) verbunden sind, das mit dem Getriebe integral ausgebildet ist,
**dadurch gekennzeichnet, dass**
das Doppelkupplungsgetriebe (10) ferner eine Eingangsantriebswelle (11) umfasst, wobei das mindestens eine drehbare Verbindungszahnrad (58, 59) drehbar auf der Eingangsantriebswelle (11) montiert ist.

2. Doppelkupplungsgetriebe (10) nach Anspruch 1, wobei sich die Eingangsantriebswelle (11) entlang des Getriebes parallel zu den sich parallel zueinander erstreckenden Wellen für ungerade Gänge (44) und gerade Gänge (46) erstreckt.

3. Doppelkupplungsgetriebe (10) nach einem der vorhergehenden Ansprüche, wobei das drehbare Ausgangselement (57) der Kupplung für ungerade Gänge (12) mit einem Gehäuse (47) der Kupplung für ungerade Gänge (12) verbunden ist oder ein solches umfasst und wobei das drehbare Ausgangselement (56) der Kupplung für gerade Gänge (13) mit einem Gehäuse (41) der Kupplung für gerade Gänge (13) verbunden ist oder ein solches umfasst.

4. Doppelkupplungsgetriebe (10) nach einem der vorhergehenden Ansprüche, wobei das mindestens eine drehbare Verbindungszahnrad (58, 59) zu einem nicht-einheitlichen Übersetzungsverhältnis zwischen den drehbaren Ausgangselementen (57, 56) der Kupplungen für ungerade und gerade Gänge (12, 13) führt.

5. Doppelkupplungsgetriebe (10) nach einem der vorhergehenden Ansprüche, wobei jedes ungeradzahlige Zahnrad (17, 18, 19, 21) auf der Welle für ungerade Gänge (44) selektiv frei drehbar ist und wobei das Getriebe (10) mindestens einen ungeradzahligen Zahnradwähler (27, 28) umfasst, der jeweils ein ausgewähltes ungeradzahliges Zahnrad an der Welle für ungerade Gänge (44) fixiert.

6. Doppelkupplungsgetriebe (10) nach einem der vorhergehenden Ansprüche, wobei jedes geradzahlige Zahnrad (22, 23, 24, 26) selektiv frei drehbar auf der Welle für gerade Gänge (46) ist und wobei das Getriebe (10) mindestens einen geraden Zahnradwähler (29, 31) umfasst, der jeweils ein ausgewähltes geradzahliges Zahnrad (22, 23, 24, 26) an der Welle für gerade Gänge (46) fixiert.

7. Doppelkupplungsgetriebe (10) nach einem der vorhergehenden Ansprüche, wobei die Getriebeausgangskomponente (32) mindestens ein Ausgangszahnrad (51, 52, 53, 54) umfasst, das ein ungeradzahliges Zahnrad (17, 18, 19, 21) und ein geradzahliges Zahnrad (22, 23, 24, 26) verbindet, wodurch die Drehung zwischen den Zahnrädern übertragen wird, die jeweils von den Wellen für die ungeraden und geraden Gänge (44, 46) getragen werden.

8. Doppelkupplungsgetriebe (10) nach einem der vorhergehenden Ansprüche, das ein drehbares Eingangselement mit Vorwärtsübersetzung (71) für die Kupplung für ungerade Gänge (12) und die Kupplung für gerade Gänge (13) aufweist, wobei das drehbare Eingangselement mit Vorwärtsübersetzung (71) antriebsmäßig in die Eingangswelle (11) eingreift, wodurch eine Drehung des drehbaren Eingangselements mit Vorwärtsübersetzung (71) selektiv eine Drehung des Eingangselements der Kupplung für ungerade Gänge (12) und der Kupplung für gerade Gänge (13) in einer Vorwärtsdrehrichtung bewirkt.

9. Doppelkupplungsgetriebe (10) nach Anspruch 8, wobei die Kupplung für gerade Gänge (13) eine selektiv auslösbare Vorwärtsantriebskupplung (37) umfasst, die das drehbare Eingangselement für gerade Gänge (71) mit dem Rest der Kupplung für gerade Gänge (13) verbindet.

10. Doppelkupplungsgetriebe (10) nach Anspruch 8 oder Anspruch 9, das ein drehbares Eingangselement mit umgekehrtem Übersetzungsverhältnis (72) für die Kupplung für ungerade Gänge (12) und die Kupplung für gerade Gänge (13) umfasst, wobei das drehbare Eingangselement mit umgekehrtem Übersetzungsverhältnis (72) antriebsmäßig in das drehbare Eingangselement mit Vorwärtsübersetzung (71) eingreift, wodurch selektiv eine Drehung des Eingangselements der Kupplung für ungerade Gänge (12) und der Kupplung für gerade Gänge (13) in einer umgekehrten Drehrichtung verursacht wird.

11. Doppelkupplungsgetriebe (10) nach Anspruch 10, wobei die Kupplung für ungerade Gänge (12) eine selektiv lösbare Rückwärtsantriebskupplung (64) umfasst, die das drehbare Eingangselement für ungerade Gänge (72) mit dem Rest der Kupplung für ungerade Gänge (12) verbindet.

12. Doppelkupplungsgetriebe (10) nach einem der Ansprüche 9 und 10, wobei die Vorwärtsantriebskupplung (37) und die Rückwärtsantriebskupplung (64) auf einer sich gegenseitig ausschließenden Basis arbeiten, wodurch jeweils nur eine der Kupplungen den Antrieb überträgt.

## Revendications

1. Transmission à double embrayage (10) pour un véhicule comprenant un embrayage à engrenages impairs (12) et un arbre d'engrenages impairs associé (44) supportant au moins deux engrenages rotatifs impairs (17, 18, 19, 21), l'embrayage à engrenages impairs (12) étant destiné à transmettre un entraînement d'entrée rotatif par l'intermédiaire d'un engrenage rotatif sélectionné parmi les engrenages rotatifs impairs (17, 18, 19, 21) à un composant de transmission de sortie (32) ; un embrayage à engrenages pairs (13) et un arbre d'engrenages pairs associé (46) supportant au moins deux engrenages rotatifs pairs (22, 23, 24, 26), l'embrayage à engrenages pairs (13) étant destiné à transmettre un entraînement d'entrée rotatif par l'intermédiaire d'un engrenage rotatif sélectionné parmi les engrenages rotatifs pairs (22, 23, 24, 26) au composant de transmission de sortie (32), le composant de transmission de sortie (32) pouvant être relié sélectivement à l'un desdits engrenages pairs ou impairs à la fois et les embrayages à engrenages impairs ou pairs (12, 13) étant agencés pour transmettre un entraînement sur une base mutuellement exclusive, dans laquelle l'embrayage à engrenages impairs (12) et l'embrayage à engrenages pairs (13) comprennent chacun un élément de sortie rotatif (57, 56), les éléments de sortie rotatifs (57, 56) des embrayages respectifs étant reliés par au moins un engrenage de liaison rotatif (58, 59) qui fait partie intégrante de la transmission, **caractérisée en ce que**
ladite transmission à double embrayage (10) comprend en outre un arbre d'entraînement d'entrée (11), l'au moins un engrenage de liaison rotatif (58, 59) étant monté de manière rotative sur l'arbre d'entraînement d'entrée (11).

2. Transmission à double embrayage (10) selon la revendication 1, dans laquelle l'arbre d'entraînement d'entrée (11) s'étend le long de la transmission parallèle à l'arbre d'engrenages impairs (44) et l'arbre à engrenages pairs (46) qui s'étendent parallèlement l'un par rapport à l'autre.

3. Transmission à double embrayage (10) selon l'une quelconque des revendications précédentes, dans laquelle l'élément de sortie rotatif (57) de l'embrayage à engrenages impairs (12) est relié à ou comprend un boîtier (47) d'embrayage à engrenages impairs (12) et dans laquelle l'élément de sortie rotatif (56) de l'embrayage à engrenages pairs (13) est relié à ou comprend un boîtier (41) d'embrayage à engrenages pairs (13).

4. Transmission à double embrayage (10) selon l'une quelconque des revendications précédentes, dans laquelle l'au moins un engrenage de liaison rotatif (58, 59) génère un rapport d'engrenage non unitaire entre les éléments de sortie rotatifs (57, 56) des embrayages à engrenages impairs et pairs (12, 13).

5. Transmission à double embrayage (10) selon l'une quelconque des revendications précédentes, dans laquelle chaque embrayage à engrenages impairs (17, 18, 19, 21) peut tourner librement de manière sélective autour de l'arbre d'engrenages impairs (44) et dans laquelle la transmission (10) comprend au moins un sélecteur de vitesses impaires (27, 28) qui fixe un engrenage impair sélectionné à la fois à l'arbre d'engrenages impairs (44).

6. Transmission à double embrayage (10) selon l'une quelconque des revendications précédentes, dans laquelle chaque engrenage pair (22, 23, 24, 26) peut tourner librement de manière sélective autour de l'arbre d'engrenages pairs (46) et dans laquelle la transmission (10) comprend au moins un sélecteur d'engrenages pairs (29, 31) qui fixe un engrenage pair sélectionné à la fois à l'arbre d'engrenages pairs (46).

7. Transmission à double embrayage (10) selon l'une quelconque des revendications précédentes, dans laquelle le composant de transmission de sortie (32) comprend au moins un engrenage de sortie (51, 52, 53, 54) reliant ledit engrenage impair (17, 18, 19, 21) et ledit engrenage pair (22, 23, 24, 26) pour transférer la rotation entre les engrenages supportés respectivement par lesdits arbres d'engrenages impairs et pairs (44, 46).

8. Transmission à double embrayage (10) selon l'une quelconque des revendications précédentes, dans laquelle un élément d'entrée rotatif de rapport avant (71) pour l'embrayage à engrenages impairs (12) et l'embrayage à engrenages pairs (13), l'élément d'entrée rotatif de rapport avant (71) étant mis en prise par entraînement avec l'arbre d'entrée (11), dans lequel la rotation de l'élément d'entrée rotatif de rapport avant (71) entraîne la rotation sélective de l'élément d'entrée de l'embrayage à engrenages impairs (12) et de l'embrayage à engrenages pairs (13) dans une direction de rotation avant.

9. Transmission à double embrayage (10) selon la revendication 8, dans laquelle l'embrayage à engrenages pairs (13) comprend un embrayage d'entraînement avant libéré de manière sélective (37) reliant l'élément d'entrée rotatif des engrenages pairs (71) au reste de l'embrayage à engrenages pairs (13).

10. Transmission à double embrayage (10) selon la revendication 8 ou 9, comprenant un élément d'entrée rotatif de rapport arrière (72) pour l'embrayage à engrenages impairs (12) et l'embrayage à engrenages pairs (13), l'élément d'entrée rotatif de rapport arrière (72) étant mis en prise par entraînement avec l'élément d'entrée rotatif de rapport avant (71) permettant la rotation sélective de l'élément d'entrée de l'embrayage à engrenages impairs (12) et de l'embrayage à engrenages pairs (13) dans une direction de rotation arrière.

11. Transmission à double embrayage (10) selon la revendication 10, dans laquelle l'embrayage à engrenages impairs (12) comprend un embrayage d'entraînement arrière sélectivement détachable (64) reliant l'élément d'entrée rotatif pour engrenages impairs (72) au reste de la boîte d'embrayage pour engrenages impairs (12).

12. Transmission à double embrayage (10) selon les revendications 9 et 10, dans laquelle l'embrayage d'entraînement avant (37) et l'embrayage d'entraînement arrière (64) fonctionnent sur une base mutuellement exclusive permettant à un seul desdits embrayages à la fois de transférer l'entraînement.
